# EUROPÄISCHE PATENTSCHRIFT

(11) **EP 1 072 455 B1**
(45) Veröffentlichungstag und Bekanntmachung des Hinweises auf die Patenterteilung: **28.04.2004**
(21) Anmeldenummer: 00102855.4
(22) Anmeldetag: 11.02.2000
(51) Int. Cl.: B60J 7/185

(54) **Schlossteil zum lösbaren Verbinden eines Fahrzeugdachs mit einem Karosseriebauteil**
Locking element for releasably lock a vehicle roof to a vehicle body part
Elément de fermeture pour fixer de façon amovible un toit de véhicule à une partie de carrosserie

(30) Priorität: 29.07.1999 DE 19935739
(43) Veröffentlichungstag der Anmeldung: 31.01.2001
(73) Patentinhaber: ISE Industries GmbH, 58455 Witten (DE)
(72) Erfinder: Plesternings, Frank, 44269 Dortmund (DE)
(74) Vertreter: Patentanwälte Wenzel & Kalkoff

(56) Entgegenhaltungen:
- EP-A- 0 309 065
- EP-A- 0 529 288
- EP-A- 0 863 033
- EP-A- 0 930 187

## Beschreibung

Die Erfindung betrifft ein Schloßteil zum lösbaren Verbinden eines Fahrzeugdaches mit einem Karosseriebauteil mittels einer mit dem Schloßteil in Eingriff bringbaren Verriegelungsvorrichtung, wobei das Schloßteil
- mindestens eine Sperrvorrichtung zur Aufnahme eines Verschlußhakens und
- eine Halterung zum Befestigen des Schloßteils an dem Karosseriebauteil aufweist.

Ein bekanntes Schloßteil der vorstehenden Art wird bisher aus metallischen Werkstoffen hergestellt. Das Schloßteil wird dabei entweder gießtechnisch als Druckgußteil mit anschließender Nachbearbeitung oder aus einem Metallrohling mittels spanender Bearbeitungsverfahren hergestellt. Bevorzugte Materialien sind dabei Werkzeugstähle, Aluminium und Zinkdruckguß. Ein gattungsgemäßes Schlossteil ist aus dem Dokument EP 0 863 033 A bekannt.

Nachteilig für beide Fertigungsverfahren zur Herstellung bekannter Schloßteile sind ein hoher Zeitaufwand und hohe Herstellungskosten, die u.a. durch hohe Werkzeug- und Materialkosten hervorgerufen werden.

Zudem erlauben die geforderten Festigkeitseigenschaften der Schloßteile keine Materialreduzierung, weshalb diese ein hohes Eigengewicht aufweisen.

Es ist daher Aufgabe der vorliegenden Erfindung, ein Schloßbauteil der eingangs genannten Art zu schaffen, dessen Herstellung mit geringerem Aufwand erfolgen kann.

Zur Lösung dieser Aufgabe wird erfindungsgemäß vorgeschlagen, daß das Schloßteil aus
- einem Kunststoff-Formstück, an dem
   - die Sperrvorrichtung zur Aufnahme des Verschlußhakens ausgebildet ist, und aus
- einer Halterung zur Aufnahme des Kunststoff-Formstücks und zum Befestigen des Schloßteils an dem Karosseriebauteil besteht.

Erfindungsgemäß wird das Schloßteil unterteilt, nämlich in eine relativ leicht und einfach herzustellende Halterung als stabile Verbindung zwischen den Schloßbauteilen und dem Karosseriebauteil. und in ein Kunststoff-Formstück, das die eigentlichen Schloßbauteile umfaßt, z.B. als Kunststoffspritzteil herstellbar ist und in der Halterung aufgenommen und befestigt wird.

Neben geringen Herstellungskosten durch geringere Formkosten für das Kunststoff-Formstück sowie durch kurze Herstellungszeiten und relativ geringe Rohmaterialkosten, zeichnet sich das erfindungsgemäße Schloßteil auch durch ein geringes Gewicht aus. Zudem kann durch die Verwendung des Kunststoff-Formstücks auf einen Korrosionsschutz und auf zusätzliche Dämpfungselemente verzichtet werden, die Stöße zwischen der Verriegelungsvorrichtung und dem Schloßteil abfangen sollen.

Die üblicherweise zur Vermeidung von Klapper- und Schleifgeräuschen notwendige Kunststoffummantelung der Bauteile der Verriegelungsvorrichtung kann ebenfalls entfallen, da durch die Verwendung des erfindungsgemäßen Kunststoff-Formstücks den Bauteilen der Verriegelungsvorrichtung der Kunststoff des Schloßteils als geeignetes Dämpfungsmittel zur Verfügung steht.

Grundsätzlich kann das Schloßteil mit einer einzigen Öffnung zur.Aufnahme des Verschlußhakens ausgeführt werden, wodurch eine sehr geringe Baugröße des Schloßteils erreicht wird. Nach einer vorteilhaften Weiterbildung der Erfindung sind an dem Kunststoff-Formstück jedoch Öffnungen zur Aufnahme weiterer Bauteile der Verriegelungsvorrichtung ausgebildet. Diese Ausgestaltung der Erfindung ermöglicht es, alle zur Aufnahme der Bauteile der Verriegelungsvorrichtung benötigten Öffnungen im Schloßteil zu integrieren. Auf zusätzliche Bauteile, die andernfalls zur Aufnahme der weiteren Bauteile der Verriegelungsvorrichtung benötigt werden, kann somit verzichtet werden.

Bei der Verwendung separater Bauteile für die jeweiligen Öffnungen besteht zudem die Gefahr, daß sich im Betrieb die Position der Bauteile und somit auch die Position der Öffnungen zueinander verändert. Die in dieser Weiterbildung beschriebene gemeinsame Anordnung der benötigten Öffnungen im einteilig ausgebildeten Kunststoff-Formstück erlaubt dagegen die dauerhafte Anordnung der verwendeten Öffnungen in der für die korrespondierend ausgebildeten Bauteile der Verriegelungsvorrichtung vorgegebenen Position, so daß auch nach fortgeschrittener Nutzungsdauer eine optimale Anordnung des Fahrzeugdaches am Karosseriebauteil gewährleistet ist.

Nach einer bevorzugten Ausführungsform der Erfindung ist an dem Kunststoff-Formstück auch die Öffnung zur Aufnahme eines Zentrierbolzens und/oder eines Verriegelungshebels ausgebildet. Der Zentrierbolzen erlaubt die genaue Positionierung der Verriegelungsvorrichtung am Schloßteil, so daß gewährleistet ist, daß der Verschlußhaken mit der korrespondierenden Öffnung in Eingriff kommt. Der Verriegelungshebel sichert die Position des Verschlußhakens in dessen Schließlage, wodurch einem ungewollten Öffnen des Verschlußhakens wirksam vorgebeugt wird.

Grundsätzlich ist die Anordnung der verschiedenen Öffnungen im Gehäuse frei wählbar bzw. an die Vorgaben der Verriegelungsvorrichtung anpassbar. Nach einer vorteilhaften Weiterbildung der Erfindung ist das Kunststoff-Formstück jedoch als langgestrecktes Gehäuse ausgebildet, in dem die Öffnung zur Aufnahme des Zentrierbolzens, die Öffnung zur Aufnahme des Verriegelungshebels sowie eine weitere Öffnung der Sperrvorrichtung zur Aufnahme des Verschlußhakens in einer Reihe angeordnet sind. Unter der Voraussetzung der Verwendung einer entsprechend ausgebildeten Verriegelungsvorrichtung kann durch diese Ausgestaltung der Erfindung eine platzsparende Bauform erreicht werden, die sich problemlos an einem Karosseriebauteil, vorzugsweise an einem Windschutzscheibenrahmen anbringen läßt.

Nach einer bevorzugten Ausführungsform der Erfindung ist das Kunststoff-Formstück derart ausgebildet, daß der Verschlußhaken das Kunststoff-Formstück beim Schließen des Fahrzeugdaches bereichsweise hintergreift. Das Kunststoff-Formstück ist dabei vorzugsweise auf der der Verriegelungsvorrichtung abgewandten Seite entsprechend der Form der Kontaktfläche des Verschlußhakens ausgebildet, so daß ein möglichst großflächiger Kontaktbereich entsteht, über den alle auftretenden Kräfte übertragen werden können.

Nach einer Weiterbildung der Erfindung ist zwischen der Öffnung zur Aufnahme des Verschlußhakens und der Öffnung zur Aufnahme des Verriegelungshebels ein Steg vorgesehen, hinter den der Verschlußhaken beim Schließen des Fahrzeugdaches greift. Über die vorzugsweise flächige Verbindung zwischen dem Verschlußhaken und dem Steg wird das Fahrzeugdach am Karosseriebauteil fixiert. Zur Sicherung des Verschlußhakens kann der Verriegelungshebel den Verschlußhaken in einer Schließlage hintergreifen, so daß gewährleistet ist, daß der Verschlußhaken nicht ungewollt mit dem Verschlußhaken außer Eingriff kommt.

Um das Einführen der Bauteile der Verriegelungsvorrichtung in die Öffnungen des Schloßteils zu erleichtern, ist vorteilhafterweise vorgesehen, daß die dem Fahrzeugdach zugewandten Seiten der Öffnungen zur Aufnahme des Zentrierbolzens, des Verschlußhakens und des Verriegelungshebels trichterförmig ausgebildet sind. Gegebenenfalls vorhandene Lagetoleranzen zwischen dem Schloßteil und der Verrieglungsvorrichtung können dadurch ausgeglichen werden.

Nach einer weiteren Ausgestaltung der Erfindung ist in der Öffnung zur Aufnahme des Verschlußhakens eine drehbare Rolle angeordnet, die in der Schließlage Relativbewegungen des Verschlußhakens gegenüber dem Kunststoff-Formstück aufnimmt. Bei dieser Ausführungsform liegt der Verriegelungshebel in der Schließlage an der Rolle an. Diese nimmt durch Rotation um ihre Drehachse eventuell auftretende Relativbewegungen zwischen dem Verschlußhaken und dem Schloßteil auf. Reibgeräusche zwischen dem Verschlußhaken und dem Schloßteil können dadurch nahezu vollständig ausgeschlossen werden.

Grundsätzlich ist die Wahl des Materials für die Rolle entsprechend den konstruktiven Bedingungen frei wählbar. Nach einer weiteren Ausgestaltung der Erfindung ist die drehbare Rolle jedoch aus Kunststoff gebildet. Die Verwendung einer Kunststoff-Rolle zeichnet sich insbesondere durch geringe Material- und Herstellungskosten aus. Zudem besteht die Möglichkeit, die Form der Kunststoff-Rolle optimal an den verwendeten Verschlußhaken anzupassen.

Nach einer bevorzugten Ausführungsform der Erfindung ist an der Halterung eine ein- oder mehrteilige Aufnahme ausgebildet, die das Kunststoff-Formstück ringsum oder abschnittsweise einfasst und abstützt. Durch eine derartige Aufnahme kann eine sichere Befestigung des Kunststoff-Formstücks an der Halterung gewährleistet werden. Die Art der Aufnahme kann dabei unter Berücksichtigung der auftretenden Kräfte entsprechend ausgebildet sein.

Grundsätzlich kann die Halterung aus einem beliebigen Material bestehen. So ist beispielsweise auch die Verwendung einer Kunststoff-Halterung denkbar. Nach einer Weiterbildung der Erfindung ist als Halterung jedoch ein Stahlblechteil vorgesehen, wobei die Aufnahme aus einer langgestreckten Öffnung besteht, die vorzugsweise durch Tiefziehen gebildete Stützwände aufweist. Das Stahlblechteil zeichnet sich neben seinen geringen Materialkosten noch durch leichte Verarbeitbarkeit sowie durch Steifigkeit bzw. Stabilität aus. Zur Verstärkung der Stabilität können gegebenenfalls Falze vorgesehen werden. Die Verwendung eines Stahlblechteils erlaubt zudem das Herstellen der Aufnahme durch kostengünstiges Tiefziehen. Zudem kann dadurch leicht eine stabile Aufnahme geschaffen werden, die das Kunststoff-Formstück ringsum, wie oben angeführt, einfasst und abstützt.

Nach einer bevorzugten Ausführungsform der Erfindung weist der Rand der Öffnung einen parallel zur Grundfläche der Halterung umlaufenden Steg auf, der als Stützfläche für das Kunststoff-Formstück dient. Der umlaufende Steg ermöglicht die flächige Übertragung der beim Schließen des Fahrzeugdachs zwischen Kunststoff-Formstück und Halterung auftretenden Kräfte. Bei dieser Ausführungsform wird das Kunststoff-Formstück auch im Fall sehr starker mechanischer Beanspruchung bzw. Stöße sicher in der Halterung gehalten.

Nach einer weiteren Ausgestaltung der Erfindung ist als Halterung ein Stahlblechteil vorgesehen, wobei die Aufnahme U-förmig angeordnete Stützwände aufweist. Eine derartige Ausgestaltung erlaubt eine einfache Montage des Kunststoff-Formstücks in der Aufnahme der Halterung. Zudem kann die Herstellung der Halterung durch einfaches Blechbiegen erfolgen, so daß auf aufwendige Fertigungsverfahren verzichtet werden kann.

Nach einer vorteilhaften Weiterbildung der Erfindung weist mindestens eine der Stützwände mindestens eine Öffnung auf, die mit entsprechend ausgebildeten Vorsprüngen am Kunststoff-Formstück in Eingriff bringbar ist. Diese vorteilhafte Weiterbildung der Erfindung ermöglicht eine einfache Positionierung des Kunststoff-Formstücks in der Aufnahme der Halterung. Des weiteren kann bei der Montage auf Hilfsmittel verzichtet werden, mit denen das Kunststoff-Formstück bis zur Fixierung mit Befestigungsmitteln in der gewünschten Position gehalten wird.

Grundsätzlich kann das Schloßteil auf beliebige Art am Karosseriebauteil befestigt sein. So ist beispielsweise eine einteilige Ausführung des Schloßteils mit dem Karosseriebauteil oder auch ein Verschweißen der Halterung mit dem Karosseriebauteil möglich. Demgegenüber weist die Halterung gemäß einer vorteilhaften Weiterbildung der Erfindung Bohrungen zur Aufnahme von Befestigungselementen auf, mit denen das Schloßteil am Karosseriebauteil befestigbar ist. Die Anzahl der Bohrungen in der Halterung richtet sich dabei nach der Anzahl der notwendigen Befestigungselemente.

Grundsätzlich kann das Kunststoff-Formstück auf beliebige Weise in der Aufnahme der Halterung fixiert werden. So ist beispielsweise auch eine kraft- oder stoffschlüssige Verbindung zwischen der Aufnahme und dem Kunststoff-Formstück möglich. Nach einer bevorzugten Ausführungsform der Erfindung ist das Kunststoff-Formstück vorzugsweise mittels durch das Kunststoff-Formstück und durch die Stützwände reichender Zylinderstifte in der Aufnahme befestigt. Die Zylinderstifte sichern in ergänzender Weise die Position des Kunststoff-Formstücks an der Halterung. Ein Zylinderstift kann zudem als Drehachse für die Kunststoffrolle verwendet werden, so daß auf zusätzliche Befestigungselemente für die eingangs beschriebene Rolle verzichtet werden kann.

Die Notwendigkeit einer separaten Halterung für das Kunststoff-Formstück entfällt, wenn bereits Mittel vorgesehen sind, mit denen das Kunststoff-Formstück am Karosseriebauteil befestigt werden kann. So ist die Verwendung einer Halterung entbehrlich, wenn das Karosseriebauteil bereits eine Aufnahmevorrichtung für das Kunststoff-Formstück aufweist. Auf die Verwendung einer separaten Halterung kann auch verzichtet werden, wenn nach einer vorteilhaften Weiterbildung der Erfindung die Halterung mit dem Kunststoff-Formstück einteilig ausgebildet ist. Um die geforderten Festigkeitseigenschaften des Schloßteils zu erreichen, kann ein den Anforderungen entsprechender Kunststoff gewählt werden. Des weiteren besteht die Möglichkeit, Verbundmate-. rialien wie Glasfasern oder Metallstrukturen in dem Kunststoff-Formkörper zu verankern. Durch eine derartige Ausgestaltung der Erfindung entfällt die für den Zusammenbau des Schloßteils benötigte Montagezeit, wodurch eine Reduzierung der gesamten Herstellungskosten des Schloßteils erreicht wird.

Nach einer weiteren Ausgestaltung der Erfindung ist die Halterung zum Anschluß eines Endschalters zum Anzeigen der Schließlage ausgebildet. Die Anordnung des Endschalters an der Halterung gewährleistet das fehlerfreie Anzeigen nach Erreichen der Schließlage des Verschlußhakens.

Nach einer Weiterbildung der Erfindung ist das Kunststoff-Formstück als Kunststoffspritzteil (s.o.) herstellbar. Durch diese Ausführungsform können die Kosten für die Herstellung des Kunststoff-Formstücks reduziert werden.

Grundsätzlich kann jeder den Belastungen entsprechende Kunststoff verwendet. Nach einer vorteilhaften Weiterbildung der Erfindung ist für das Kunststoff-Formstück ein glasfaserverstärkter Kunststoff vorgesehen. Dieser Kunststoff zeichnet sich durch gute Dämpfungseigenschaften sowie hohe Festigkeit und Witterungsbeständigkeit aus.

Nachstehend wird ein Ausführungsbeispiel der Erfindung anhand der Zeichnungen beschrieben. In den Zeichnungen zeigen:
- Fig. 1: Eine perspektivische Ansicht einer Oberseite eines Schloßteils, bestehend aus einer Halterung und einem Kunststoff-Formstück;
- Fig. 2: eine perspektivische Ansicht des Kunststoff-Formstücks von Fig. 1;
- Fig. 3: eine perspektivische Ansicht einer Unterseite des Schloßteils von Fig. 1;
- Fig. 4: eine perspektivische Ansicht des Schloßteils von Fig. 1 im Zusammenwirken mit Teilen einer Verriegelungsvorrichtung;
- Fig. 5: eine perspektivische Ansicht eines weiteren Ausführungsbeispiel des Schloßteils, bestehend aus einer Halterung und einem Kunststoff-Formstück;
- Fig. 6: eine perspektivische Ansicht der Oberseite des Kunststoff-Formstücks von Fig. 5;
- Fig. 7: eine perspektivische Ansicht der Unterseite des Kunststoff-Formstücks von Fig. 5;
- Fig. 8: eine perspektivische Ansicht der Halterung von Fig. 5;
- Fig. 9: eine perspektivische Ansicht des Schloßteils von Fig. 5 im Zusammenwirken mit Teilen einer weiteren Verriegelungsvorrichtung;
- Fig. 10: eine perspektivische Ansicht des Schloßteils von Fig. 5 mit in Eingriff befindlicher Verriegelungsvorrichtung von Fig. 9.

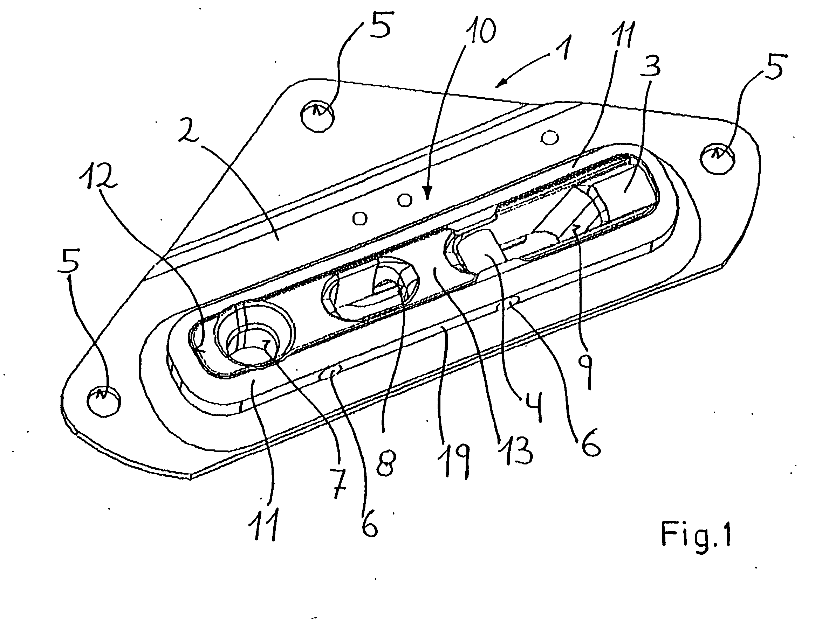

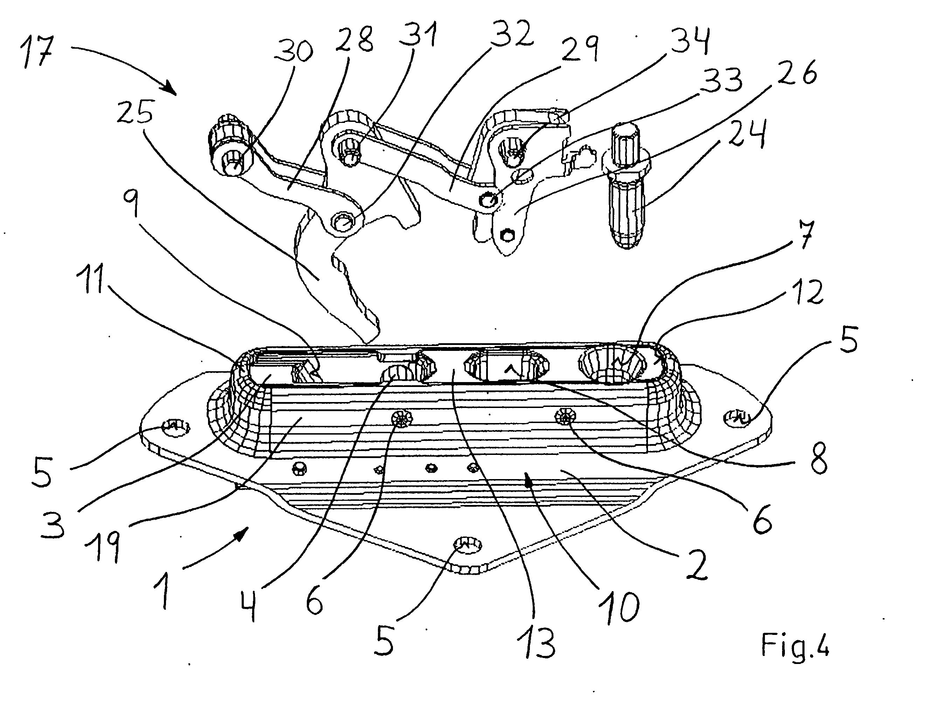

Figur 1 zeigt ein Schloßteil 1 zum lösbaren Verbinden eines Fahrzeugdaches mit einem Karosseriebauteil mittels einer mit dem Schloßteil 1 in Eingriff bringbaren Verriegelungsvorrichtung 17 (vgl. Fig. 4).

Das Schloßteil 1 weist im wesentlichen eine Halterung 2 und ein Kunststoff-Formstück 3 auf. Die Halterung 2 wird aus einem Blechteil gebildet, dessen Form im wesentlichen der Form eines rechtwinkligen Dreiecks entspricht. In dem dem rechten Winkel gegenüberliegenden Bereich der Halterung 2 weist diese einen parallel zur Grundseite der Halterung 2 verlaufende Aufnahme 10 für das Kunststoff-Formstück 3 auf. Die Aufnahme 10 weist eine Öffnung 12 auf, deren Rand einen parallel zur Grundfläche der Halterung 2 umlaufenden Steg 11 aufweist. Zum Befestigen der Halterung 2 an einem Karosseriebauteil ist die Halterung 2 in den Eckpunkten mit drei Bohrungen 5 versehen, die zur Aufnahme von hier nicht dargestellten Befestigungselementen verwendbar sind.

Die entsprechend dem Kunststoff-Formkörper 3 ausgeformte Aufnahme 10 der Halterung 2 wird vorzugsweise durch Tiefziehen gebildet'. Die dabei entstehenden Seitenwänden 19 der Aufnahme 10 liegen an den Seitenflächen des Kunststoff-Formstücks 3 an, wobei die der Öffnung 12 zugewandte Seite des Kunststoff-Formstücks 3 auf dem Steg 11 aufliegt.

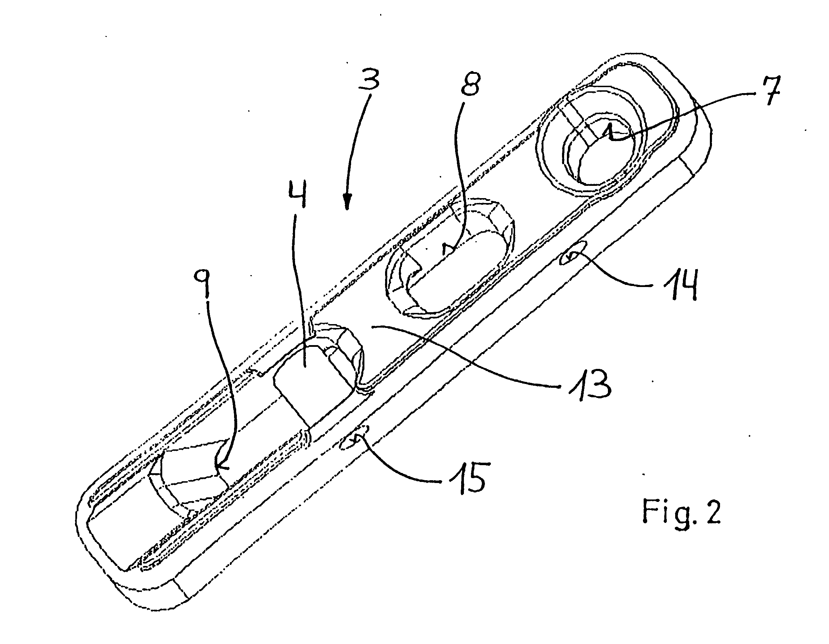

Zwei im Abstand senkrecht zu den Längsseiten und durch das Kunststoff-Formstück 3 verlaufende Bohrungen 14, 15 dienen zur Aufnahme zweier Zylinderstifte 6, die durch die Seitenwände 19 der Aufnahme 10 ragen, und mittels derer der Formkörper 3 in der Aufnahme 10 befestigt wird (vgl. Fig. 2).

Der Kunststoff-Formkörper 3 ist im wesentlichen langgestreckt ausgebildet. In Längsrichtung des Kunststoff-Formstücks 3 gesehen weist dieses drei hintereinander liegende Öffnungen 7, 8 und 9 auf. Dabei dient die kreisförmige Öffnung 7 zur Aufnahme eines Zentrierbolzens 24, die rechteckige Öffnung 8 dient zur Aufnahme eines Verriegelungshebels 26 und die rechteckige Öffnung 9 dient zur Aufnahme eines Verschlußhakens 25 (vgl. Fig. 4).

Zum Ausgleichen eventuell vorhandener Lagetoleranzen zwischen der Verriegelungsvorrichtung und den Öffnungen 7, 8, 9 des Schloßteils 1 sind die Öffnungen 7, 8, 9 auf ihrer Oberseite trichterförmig ausgebildet.

Der Verschlußhaken 25 und der Verriegelungshebel 26 sind über Gelenkzapfen 30 - 34 verschwenkbar an einem hier nicht dargestellten Grundkörper der Verriegelungsvorrichtung 17 angeordnet. Der starr am Grundkörper angeordnete Zentrierbolzen 24 gewährleistet die exakte Positionierung der Verriegelungsvorrichtung 17 an dem Schloßteil 1.

In einer Schließlage, bei der das Fahrzeugdach am Karosseriebauteil fixiert ist, hintergreift der Verschlußhaken 25 den zwischen den Öffnungen 8 und 9 ausgebildeten Steg 13 und wird durch den Verriegelungshebel 26 arretiert. Die Innenseite des Verschlußhakens 25 steht dabei in Kontakt mit einer neben dem Steg 13 in der Öffnung 9 angeordneten drehbaren Kunststoffrolle 4, die auf dem Zylinderstift 6 drehbar gelagert ist. Relativbewegungen des Verschlußhakens 25 in der Schließlage werden somit in eine Drehbewegung der Kunststoffrolle 4 umgewandelt, so daß Reibgeräusche zwischen dem Verschlußhaken 25 und dem Schloßteil 1 vermieden werden.

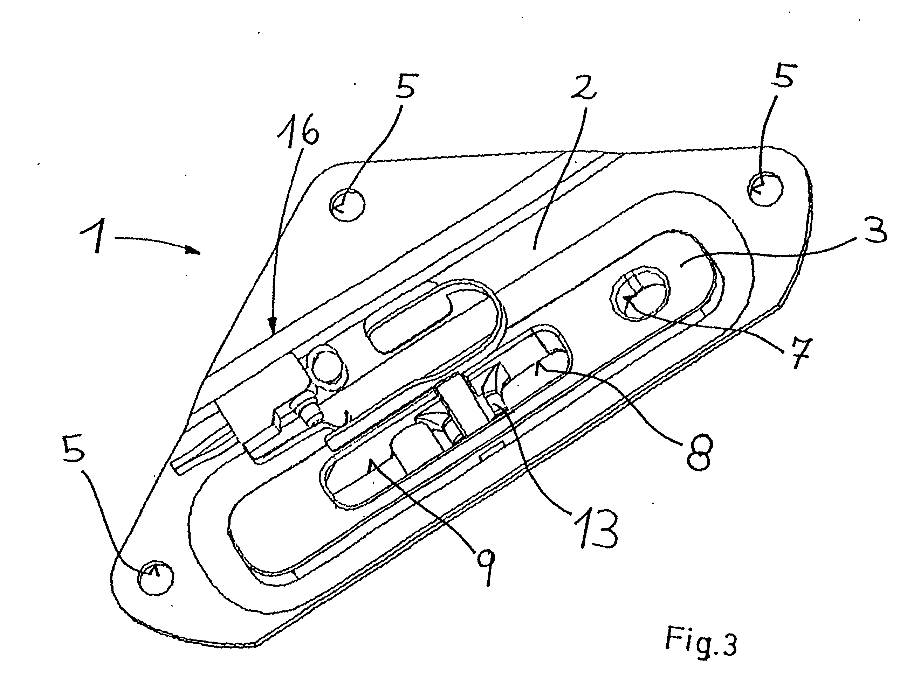

Wie Figur 3 erkennen läßt, ist an der Unterseite der Halterung 2 ein Endschalter 16 angeschraubt, der in der Schließlage mit dem Verschlußhaken 25 in Eingriff kommt und die Endstellung des Verschlußhakens 25 signalisiert.

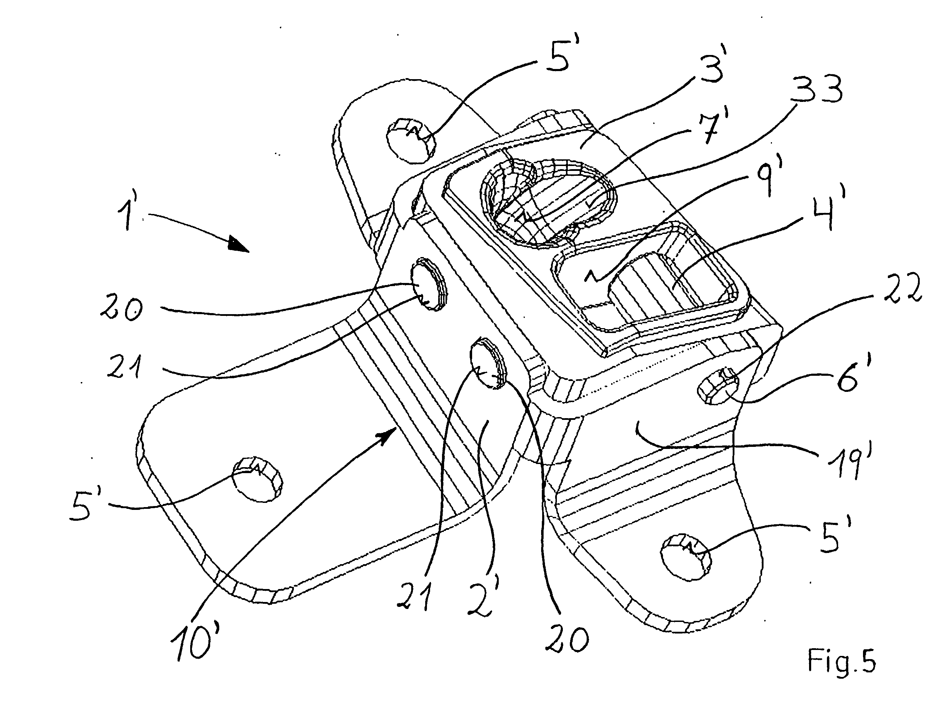

Die in Figur 5 dargestellte Ausführungsform zeigt ein weiters Schloßteil 1', das eine Halterung 2' und ein Kunststoff-Formstück 3' aufweist.

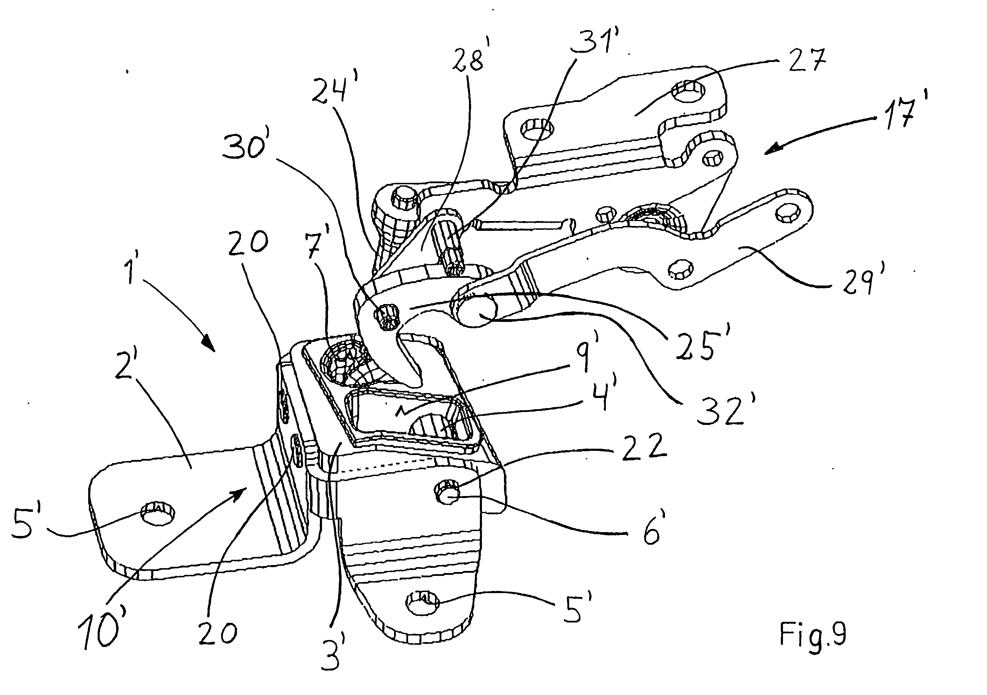

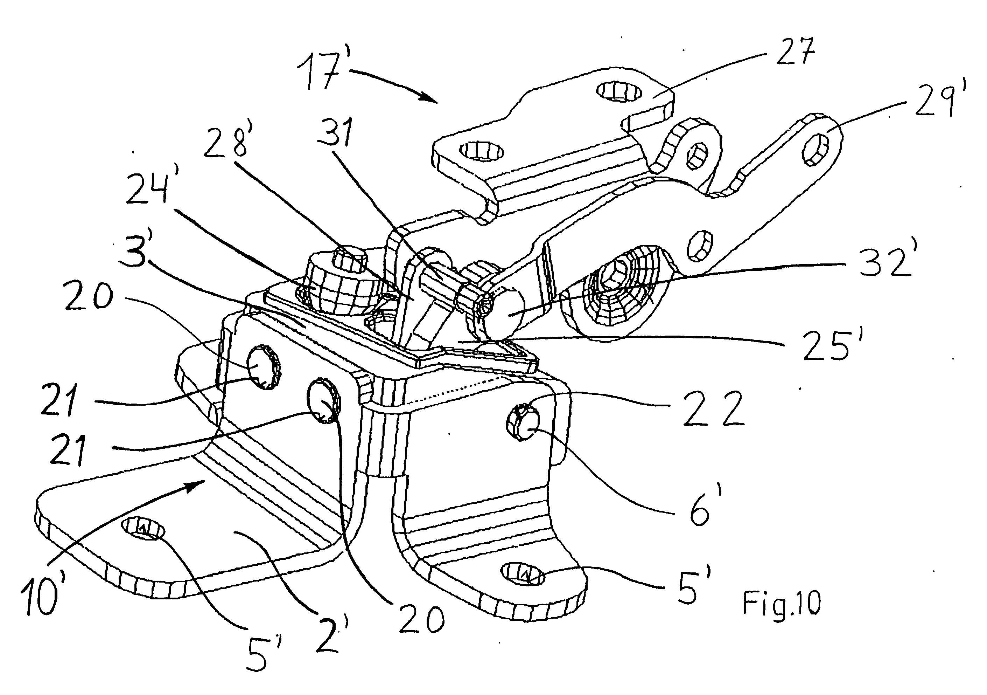

Zur Aufnahme eines Zentrierbolzens 24' einer Verriegelungsvorrichtung 17' weist das Kunststoff-Formstück 3' eine Öffnung 7' auf, die auf der dem Zentrierbolzen 24' zugewandten Seite trichterförmig ausgebildet ist, wodurch eventuell vorhandene Lagetoleranzen zwischen dem Schloßteil 1' und der Verriegelungsvorrichtung 17' ausgeglichen werden. Die Öffnung 7' weist zusätzlich zur trichterförmigen Ausbildung ein Einlaufschräge 33 auf, die in ergänzender Weise das Einlaufen des Zentrierbolzen 24' in die Öffnung 7' unterstützt (vgl. Fig. 9 und 10).

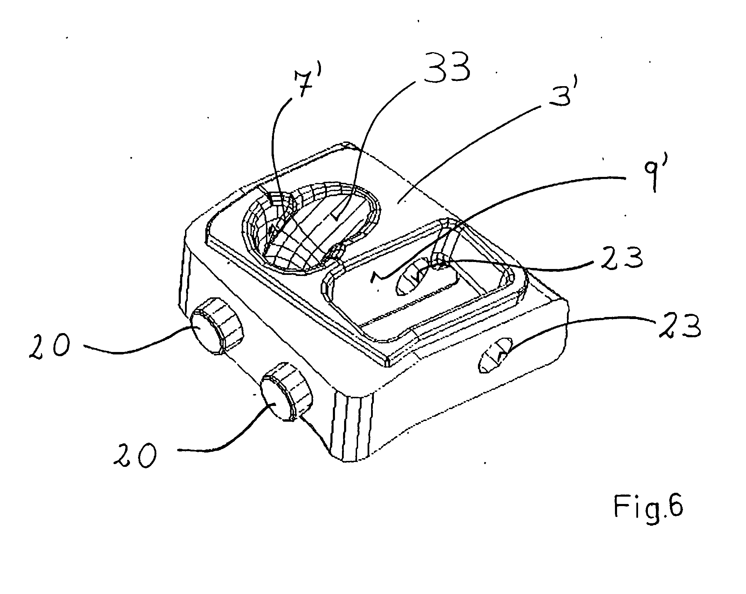

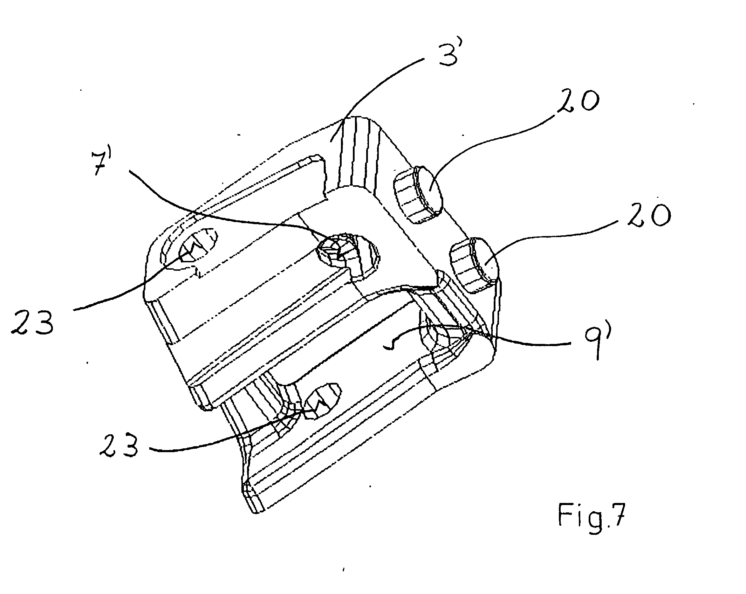

Neben der Öffnung 7' zur Aufnahme des Zentrierbolzens 24' weist das Kunststoff-Formstück 3' eine im wesentlichen rechteckige Öffnung 9' auf, die zur Aufnahme des Verschlußhakens 25' dient und ebenfalls zum Ausgleich von Lagetoleranzen zwischen dem Schloßteil 1' und der Verriegelungsvorrichtung 17' auf der der Verriegelungsvorrichtung 17' zugewandten Seite trichterförmig ausgebildet ist (vgl. Fig 6 und 7) .

Zur Befestigung des Kunststoff-Formstücks 3' in der Aufnahme 10' der Halterung 2' weist dieses zusätzlich zu einer sich durch das Kunststoff-Formstück 3' erstreckende Bohrung 23 zwei angeformte Zapfen 20 auf, die senkrecht an der der Halterung 21 zugewandten Außenseite des Kunststoff-Form-stücks 3' angeordnet sind.

Die U-förmig ausgebildete Aufnahme 10' der Halterung 2' dient zur Aufnahme des Kunststoff-Formstücks 3'. Die Seitenwände 19' der Halterung 2' weisen Bohrungen 21, 22 auf. Die nebeneinander angeordneten Bohrungen 21, 22 dienen dabei zur Aufnahme der Zapfen 20 des Kunststoff-Formstücks 3'.

Ein Zylinderstift 6', der sich durch die Bohrungen 22 der gegenüberliegenden Seitenwände 19' der Halterung 2' und durch die Bohrungen 23 im Kunststoff-Formstück 3' erstreckt, sichert die Position des Kunststoff-Formstücks 3' in der Aufnahme 10' der Halterung 2'.

In der Öffnung 9' dient der Zylinderstift 6' zusätzlich zur Aufnahme einer drehbaren Kunststoff-Rolle 4', die in der Schließlage Relativbewegungen des Verschlußhakens 25' aufnimmt und somit Reibgeräusche zwischen dem Verschlußhaken 25' und dem Schloßteil 1' verhindert.

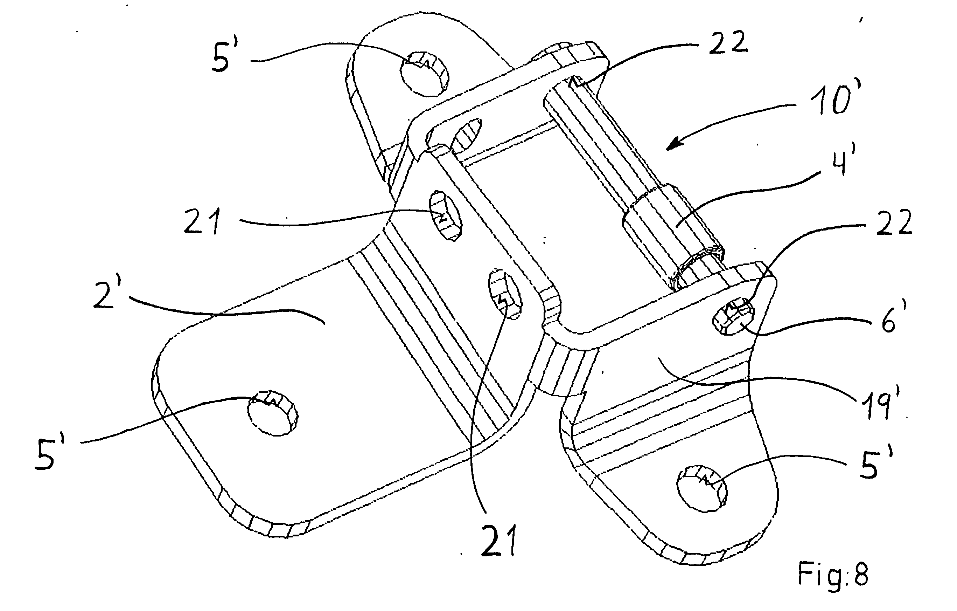

Zur Befestigung des Schloßteils 1' an dem Karosseriebauteil weist die Halterung 2' drei senkrecht zu den Seitenwänden 19' angeordnete Bereiche auf, die mit Bohrungen 5' versehen sind, die wiederum zur Aufnahme von Befestigungsmitteln dienen, mittels derer die Halterung 2' am Karosseriebauteil befestigbar ist (vgl. Fig. 8).

Der Verschlußhaken 25' der zum Schloßteil 1' korrespondierend ausgebildeten Verriegelungsvorrichtung 17' ist über Gelenkzapfen 30' - 32' und entsprechend ausgebildete Hebel 28', 29' an einem Grundkörper 27 verschwenkbar angeordnet. Der Zentrierbolzen 24' ist über hier nicht dargestellte Bauteile starr mit dem Grundkörper 27 verbunden.

## Patentansprüche

1. Schloßteil (1, 1') zum lösbaren Verbinden eines Fahrzeugdaches mit einem Karosseriebauteil mittels einer mit dem Schloßteil in Eingriff bringbaren Verriegelungsvorrichtung (17, 17'), wobei das Schloßteil (1, 1')
- mindestens eine Sperrvorrichtung zur Aufnahme eines Verschlußhakens (25, 25') und
- eine Halterung (2, 2') zum Befestigen des Schloßteils (1, 1') an dem Karosseriebauteil aufweist,
**dadurch gekennzeichnet, daß** das Schloßteil (1, 1') aus
- einem Kunststoff-Formstück (3, 3'), an dem
- die Sperrvorrichtung zur Aufnahme des Verschlußhakens (25, 25') ausgebildet ist, und aus
- einer Halterung (2, 2') zur Aufnahme des Kunststoff-Formstücks (3, 3') und zum Befestigen des Schloßteils (1, 1') an dem Karosseriebauteil besteht.

2. Schloßteil nach Anspruch 1, **dadurch gekennzeichnet, daß** an dem Kunststoff-Formstück (3, 3') Öffnungen (7, 7',8) zur Aufnahme weiterer Bauteile der Verriegelungsvorrichtung (17, 17') ausgebildet sind.

3. Schloßteil nach Anspruch 1 oder 2, **dadurch gekennzeichnet, daß** an dem Kunststoff-Formstück (3, 3') auch die Öffnung (7, 7', 8) zur Aufnahme eines Zentrierbolzens (24, 24') und/oder eines Verriegelungshebels (26, 26') ausgebildet ist.

4. Schloßteil nach einem oder mehreren der vorhergehenden Ansprüche, **dadurch gekennzeichnet, daß** das Kunststoff-Formstück (3, 3') als langgestrecktes Gehäuse ausgebildet ist, in dem die Öffnung (7) zur Aufnahme des Zentrierbolzens (24), die Öffnung (8) zur Aufnahme des Verriegelungshebels (26) sowie eine weitere Öffnung (9) der Sperrvorrichtung zur Aufnahme des Verschlußhakens (25) in einer Reihe angeordnet sind.

5. Schloßteil nach einem oder mehreren der vorhergehenden Ansprüche, **dadurch gekennzeichnet, daß** das Kunststoff-Formstück (3, 3') derart ausgebildet ist, daß der Verschlußhaken (25, 25') das Kunststoff-Formstück (3, 3') beim Schließen des Fahrzeugdaches bereichsweise hintergreift.

6. Schloßteil nach einem oder mehreren der vorhergehenden Ansprüche, **dadurch gekennzeichnet, daß** zwischen der Öffnung (9) zur Aufnahme des Verschlußhakens (25) und der Öffnung (8) zur Aufnahme des Verriegelungshebels (26) ein Steg (13) vorgesehen ist, hinter den der Verschlußhaken (25) beim Schließen des Fahrzeugdachs greift.

7. Schloßteil nach einem oder mehreren der vorhergehenden Ansprüche, **dadurch gekennzeichnet, daß** die dem Fahrzeugdach zugewandten Seiten der Öffnungen (7, 7', 8, 8', 9, 9') zur Aufnahme des Zentrierbolzens (24, 24'), des Verschlußhakens (25, 25') und des Verriegelungshebels (26) trichterförmig ausgebildet sind.

8. Schloßteil nach einem oder mehreren der vorhergehenden Ansprüche, **dadurch gekennzeichnet, daß** in der Öffnung zur Aufnahme des Verschlußhakens (25, 25') eine drehbare Rolle (4, 4') angeordnet ist, die in der Schließlage Relativbewegungen des Verschlußhakens (25, 25') gegenüber dem Kunststoff-Formstück (3, 3') aufnimmt.

9. Schloßteil nach Anspruch 8, **dadurch gekennzeichnet, daß** die drehbare Rolle aus Kunststoff gebildet ist.

10. Schloßteil nach einem oder mehreren der vorhergehenden Ansprüche, **dadurch gekennzeichnet, daß** an der Halterung (2, 2') eine ein- oder mehrteilige Aufnahme (10, 10') ausgebildet ist, die das Kunststoff-Formstück (3, 3') ringsum oder abschnittsweise einfaßt und abstützt.

11. Schloßteil nach einem oder mehreren der vorhergehenden Ansprüche, **dadurch gekennzeichnet, daß** als Halterung (2) ein Stahlblechteil vorgesehen ist, wobei die Aufnahme (10) aus einer langgestreckten Öffnung (12) besteht, die vorzugsweise durch Tiefziehen gebildete Stützwände (19) aufweist.

12. Schloßteil nach einem oder mehreren der vorhergehenden Ansprüche, **dadurch gekennzeichnet, daß** der Rand der Öffnung (12) einen parallel zur Grundfläche der Halterung (2) umlaufenden Steg (11) aufweist, der als Stützfläche für das Kunststoff-Formstück (3) verwendbar ist.

13. Schloßteil nach einem oder mehreren der vorhergehenden Ansprüche, **dadurch gekennzeichnet, daß** als Halterung (2') ein Stahlblechteil vorgesehen ist, wobei die Aufnahme (10') U-förmig angeordnete Stützwände (19') aufweist.

14. Schloßteil nach einem oder mehreren der vorhergehenden Ansprüche, **dadurch gekennzeichnet, daß** mindestens eine der Stützwände (19, 19') mindestens eine Öffnung (21) aufweist, die mit entsprechend ausgebildeten Vorsprüngen (20) am Kunststoff-Formstück (3, 3') in Eingriff bringbar ist.

15. Schloßteil nach einem oder mehreren der vorhergehenden Ansprüche, **dadurch gekennzeichnet, daß** die Halterung (2, 2') Bohrungen (5, 5') zur Aufnahme von Befestigungselementen aufweist, mit denen das Schloßteil (1, 1') am Karosseriebauteil befestigbar ist.

16. Schloßteil nach einem oder mehreren der vorhergehenden Ansprüche, **dadurch gekennzeichnet, daß** das Kunststoff-Formstück (3, 3'). mittels durch das Kunststoff-Formstück (3, 3') und durch die Stützwände (19, 19') reichender Zylinderstifte (6, 6') in der Aufnahme (10, 10') befestigt ist.

17. Schloßteil nach einem oder mehreren der vorhergehenden Ansprüche, **dadurch gekennzeichnet, daß** die Halterung (2, 2') mit dem Kunststoff-Formstück (3, 3') einteilig ausgebildet ist.

18. Schloßteil nach einem oder mehreren der vorhergehenden Ansprüche, **dadurch gekennzeichnet, daß** die Halterung (2, 2') zum Anschluß eines Endschalters (16) zum Anzeigen der Schließlage ausgebildet ist.

19. Schloßteil nach einem oder mehreren der vorhergehenden Ansprüche, **dadurch gekennzeichnet, daß** das Kunststoff-Formstück (3, 3') als Kunststoff-Spritzteil herstellbar ist.

20. Schloßteil nach einem oder mehreren der vorhergehenden Ansprüche, **dadurch gekennzeichnet, daß** für das Kunststoff-Formstück (3, 3') ein glasfaserverstärkter Kunststoff vorgesehen ist.

## Claims

1. A lock member (1, 1') for releasably attaching a vehicle roof on a body component by means of a latching assembly (17, 17') engageable with the lock member, wherein the lock member (1, 1') includes
- at least one locking assembly for receiving a locking hook (25, 25'), and
- a support (2, 2') for attaching the lock member (1, 1') on the body component,
**characterized in that**, said lock member (1, 1') comprises
- a plastic moulding (3, 3'), on which
- the locking assembly is adapted to receive said locking hook (25, 25'), and
- a support (2, 2') for receiving said plastic moulding (3, 3') and for attaching said lock member (1, 1') on said body component.

2. The lock member according to claim 1, **characterized in that** openings (7, 7', 8) are formed at said plastic moulding (3, 3') for receiving further components of said latching assembly (17, 17').

3. The lock member according to claim 1 or claim 2, **characterized in that** also an opening (7, 7', 8) is formed at said plastic moulding (3, 3') for receiving a centering stud (24, 24') and/or a latching lever (26, 26').

4. The lock member according to one or more of the preceding claims, **characterized in that** said plastic moulding (3, 3') is formed as an elongate housing, in which the opening (7) for receiving said centering stud (24), the opening (8) for receiving said latching lever (26), and a further opening (9) of said locking assembly for receiving said locking hook (25) are arranged in a row.

5. The lock member according to one or more of the preceding claims, **characterized in that** said plastic moulding (3, 3') is formed in such a way that said locking hook (25, 25') partially reaches behind said plastic moulding (3, 3') when the vehicle roof is closed.

6. The lock member according to one or more of the preceding claims, **characterized in that**, between the opening (9) for receiving said locking hook (25) and the opening (8) for receiving said latching lever (26), a web (13) is provided, behind which said locking hook (25) reaches when the vehicle roof is closed.

7. The lock member according to one or more of the preceding claims, **characterized in that** the sides of the openings (7, 7', 8, 8', 9, 9') facing the vehicle roof are formed to be funnel-shaped to receive said centering stud (24, 24'), said locking hook (25, 25'), and said latching lever (26).

8. The lock member according to one or more of the preceding claims, **characterized in that** a rotatable roller (4, 4') is arranged in the opening for receiving said locking hook (25, 25'), the roller (4, 4') compensating relative movements between said locking hook (25, 25') and said plastic moulding (3, 3').

9. The lock member according to claim 8, **characterized in that** said rotatable roller is of a plastics material.

10. The lock member according to one or more of the preceding claims, **characterized in that** a one-part or a multi-part receptacle (10, 10') is formed at said support (2, 2'), the receptacle (10, 10') wholly or partially embracing and supporting said plastic moulding (3, 3').

11. The lock member according to one or more of the preceding claims, **characterized in that** a steel sheet member is provided as said support (2), wherein said receptacle (10) comprises an elongate opening (12) having supporting walls (19) preferably formed by deep drawing.

12. The lock member according to one or more of the preceding claims, **characterized in that**, around the edge of said opening (12), there is a collar (11) in parallel configuration to the base of said support (2) and suitable as a supporting surface for said plastic moulding (3).

13. The lock member according to one or more of the preceding claims, **characterized in that** a steel sheet is used as said support (2'), wherein said receptacle (10') has supporting walls (19') arranged in a U-shape.

14. The lock member according to one or more of the preceding claims, **characterized in that** at least one of said supporting walls (19, 19') has at least one opening (21) which can be brought into engagement with correspondingly formed protrusions (20) on the plastic moulding (3, 3').

15. The lock member according to one or more of the preceding claims, **characterized in that** said support (2, 2') includes through holes (5, 5') for receiving attachment elements by which the lock member (1, 1') may be attached on the body component.

16. The lock member according to one or more of the preceding claims, **characterized in that** said plastic moulding (3, 3') is secured within said receptacle (10, 10') by means of cylindrical pins (6, 6') extending through said plastic moulding (3, 3') and through said supporting walls (19, 19').

17. The lock member according to one or more of the preceding claims, **characterized in that** said support (2, 2') is formed integral with said plastic moulding (3, 3').

18. The lock member according to one or more of the preceding claims, **characterized in that** said support (2, 2') is configured to enable mounting of a limit switch (16) to indicate the closed position.

19. The lock member according to one or more of the preceding claims, **characterized in that** said plastic moulding (3, 3') can be manufactured as an injection-moulded part.

20. The lock member according to one or more of the preceding claims, **characterized in that** a glass-fibre reinforced plastics material is provided for said plastic moulding (3, 3').

## Revendications

1. Partie de serrure (1, 1') pour relier de manière amovible un toit de véhicule à un élément de carrosserie au moyen d'un dispositif de verrouillage (17, 17') qui peut être amené en prise avec la partie de serrure, la partie de serrure (1, 1')
- présentant au moins un dispositif de blocage pour loger un crochet de fermeture (25, 25') et
- un support (2, 2') pour fixer la partie de serrure (1, 1') à l'élément de carrosserie,
**caractérisée en ce que** la partie de serrure (1, 1') est constituée par
- une pièce moulée en matière synthétique (3, 3') sur laquelle
le dispositif de blocage pour loger le crochet de fermeture (25, 25') est configuré et par
- un support (2, 2') pour loger la pièce moulée en matière synthétique (3, 3') et pour fixer la partie de serrure (1, 1') sur l'élément de carrosserie.

2. Partie de serrure selon la revendication 1, **caractérisée en ce que** des ouvertures (7, 7', 8) pour le logement d'autres éléments du dispositif de verrouillage (17, 17') sont configurées sur la pièce moulée en matière synthétique (3, 3').

3. Partie de serrure selon la revendication 1 ou 2, **caractérisée en ce que** l'ouverture (7, 7', 8) pour le logement d'un boulon de centrage (24, 24') et/ou d'un levier de verrouillage (26, 26') est aussi configurée sur la pièce moulée en matière synthétique (3, 3').

4. Partie de serrure selon l'une ou plusieurs des revendications précédentes, **caractérisée en ce que** la pièce moulée en matière synthétique (3, 3') est configurée comme un boîtier allongé dans lequel l'ouverture (7) pour le logement du boulon de centrage (24), l'ouverture (8) pour le logement du levier de verrouillage (26) ainsi qu'une autre ouverture (9) du dispositif de blocage pour le logement du crochet de fermeture (25) sont placés en une rangée.

5. Partie de serrure selon l'une ou plusieurs des revendications précédentes, **caractérisée en ce que** la pièce moulée en matière synthétique (3, 3') est configurée de telle manière que le crochet de fermeture (25, 25') a prise par derrière sur la pièce moulée en matière synthétique (3, 3') zone par zone lors de la fermeture du toit de véhicule.

6. Partie de serrure selon l'une ou plusieurs des revendications précédentes, **caractérisée en ce qu'**il est prévu une barrette (13) entre l'ouverture (9) pour loger le crochet de fermeture (25) et l'ouverture (8) pour loger le levier de verrouillage (26), barrette derrière laquelle le crochet de fermeture (25) a prise lors de la fermeture du toit de véhicule.

7. Partie de serrure selon l'une ou plusieurs des revendications précédentes, **caractérisée en ce que** les côtés des ouvertures (7, 7', 8, 8', 9, 9') tournés vers le toit de véhicule sont configurés en forme d'entonnoir pour loger le boulon de centrage (24, 24') du crochet de fermeture (25, 25') et du levier de verrouillage (26).

8. Partie de serrure selon l'une ou plusieurs des revendications précédentes, **caractérisée en ce qu'**un galet rotatif (4, 4') est placé dans l'ouverture pour loger le crochet de fermeture (25, 25'), galet qui, en position de fermeture, absorbe les mouvements relatifs du crochet de fermeture (25, 25') par rapport à la pièce moulée en matière synthétique (3, 3').

9. Partie de serrure selon la revendication 8, **caractérisée en ce que** le galet rotatif est formé en matière synthétique.

10. Partie de serrure selon l'une ou plusieurs des revendications précédentes, **caractérisée en ce qu'**un logement en une ou plusieurs parties (10, 10'), qui enserre et soutient la pièce moulée en matière synthétique (3, 3') tout autour ou par sections, est configuré sur le support (2, 2').

11. Partie de serrure selon l'une ou plusieurs des revendications précédentes, **caractérisée en ce qu'**une pièce en tôle d'acier est prévue comme support (2), le logement (10) étant constitué par une ouverture allongée (12) qui présente, de préférence, des parois de soutien (19) formées par emboutissage.

12. Partie de serrure selon l'une ou plusieurs des revendications précédentes, **caractérisée en ce que** le bord de l'ouverture (12) présente une barrette périphérique (11) parallèlement à la surface de base du support (2), barrette qui peut être utilisée comme surface d'appui pour la pièce moulée en matière synthétique (3).

13. Partie de serrure selon l'une ou plusieurs des revendications précédentes, **caractérisée en ce qu'**une pièce en tôle d'acier est prévue comme support (2'), le logement (10') présentant des parois de soutien (19') placées en forme d'U.

14. Partie de serrure selon l'une ou plusieurs des revendications précédentes, **caractérisée en ce qu'**au moins l'une des parois de soutien (19, 19') présente au moins une ouverture (21) qui peut être amenée en prise avec des saillies (20) configurées de manière correspondante sur la pièce moulée en matière synthétique (3, 3').

15. Partie de serrure selon l'une ou plusieurs des revendications précédentes, **caractérisée en ce que** le support (2, 2') présente des forures (5, 5') pour le logement d'éléments de fixation avec lesquels la partie de serrure (1, 1') peut être fixée sur l'élément de carrosserie.

16. Partie de serrure selon l'une ou plusieurs des revendications précédentes, **caractérisée en ce que** la pièce moulée en matière synthétique (3, 3') est fixée dans le logement (10, 10') au moyen de goupilles cylindriques (6, 6') qui traversent la pièce moulée en matière synthétique (3, 3') et les parois de soutien (19, 19').

17. Partie de serrure selon l'une ou plusieurs des revendications précédentes, **caractérisée en ce que** le support (2, 2') est configuré en une pièce avec la pièce moulée en matière synthétique (3, 3').

18. Partie de serrure selon l'une ou plusieurs des revendications précédentes, **caractérisée en ce que** le support (2, 2') est configuré pour le raccord d'un commutateur de fin de course (16) pour afficher la position de fermeture.

19. Partie de serrure selon l'une ou plusieurs des revendications précédentes, **caractérisée en ce que** la pièce moulée en matière synthétique (3, 3') peut être fabriquée comme pièce moulée par injection en matière synthétique.

20. Partie de serrure selon l'une ou plusieurs des revendications précédentes, **caractérisée en ce qu'**une matière synthétique renforcée par des fibres de verre est prévue pour la pièce moulée en matière synthétique (3, 3').
